# EUROPÄISCHE PATENTANMELDUNG

(11) **EP 3 546 721 A1**
(43) Veröffentlichungstag der Anmeldung: **02.10.2019**
(21) Anmeldenummer: 19165111.6
(22) Anmeldetag: 26.03.2019
(51) Int. Cl.: F02B 67/04, B60K 25/02, F02F 7/00, F16H 7/00

(54) **VERBRENNUNGSKRAFTMASCHINE**

(30) Priorität: 30.03.2018 AT 502672018
(71) Anmelder: Austro Engine GmbH, 2700 Wiener Neustadt (AT)
(72) Erfinder: LUBICH, Georg, 1130 Wien (AT)
(74) Vertreter: Sonn & Partner Patentanwälte

(57) **Zusammenfassung**

Verbrennungskraftmaschine (1), vorzugsweise Rotationskolbenmotor, insbesondere Wankelmotor, bevorzugt für ein Luftfahrzeug, aufweisend:
- einen Motorblock (2) mit einem rotierbaren Abtriebselement (3), welches insbesondere eine Abtriebswelle (4) oder ein mit der Abtriebswelle (4) verbundenes Schwungrad ist,
- ein erstes Hilfsaggregat, beispielsweise eine Wasserpumpe (6) zur Motorkühlung, welches mit der Abtriebswelle (4) verbunden ist,
- einen das erste Hilfsaggregat aufnehmenden Aggregateträger (10) mit einer das erste Hilfsaggregat antreibenden Hauptwelle (11), wobei die Hauptwelle (11) zur koaxialen Kupplung, insbesondere Steckkupplung, mit dem Abtriebselement (3) eingerichtet ist.

## Beschreibung

Die Erfindung betrifft eine Verbrennungskraftmaschine, vorzugsweise Rotationskolbenmotor, insbesondere Wankelmotor, bevorzugt für ein Luftfahrzeug, aufweisend:
- einen Motorblock mit einem rotierbaren Abtriebselement, welches insbesondere eine Abtriebswelle oder ein mit der Abtriebswelle verbundenes Schwungrad ist,
- ein erstes Hilfsaggregat, beispielsweise eine Wasserpumpe zur Motorkühlung, welches mit der Abtriebswelle verbunden ist.

Bei derartigen Verbrennungskraftmaschinen werden üblicherweise verschiedene Hilfsaggregate benötigt, wie z.B. Gebläse, Lichtmaschine, Wasserpumpe, Starter und Ölpumpe.

Aus der DE 1 451 808 ist eine gattungsgemäße Verbrennungskraftmaschine bekannt, bei welcher alle Hilfsaggregate direkt von der Exzenterwelle durch Zahn- oder Keilriemen angetrieben werden. Dadurch entfällt ein eigener Getriebekasten mit Zwischenwellen und Zahnrädern. Nachteilig ist jedoch, dass die Hilfsaggregate beim Zusammenbau der Verbrennungskraftmaschine erst nach Fertigstellung des Motorblocks einzeln montiert werden können. Im Betrieb ergibt sich ein weiterer Nachteil der bekannten Ausführung dahingehend, dass die Hilfsaggregate für die Wartung einzeln demontiert und montiert werden müssen. Weiters ist nachteilig, dass Zuglasten, hervorgerufen durch die Hilfsaggregate, auf die Hauptlager der Exzenterwelle übertragen werden.

Die DE 29 15 485 offenbart eine Rotationskolbenmaschine mit einem Gehäuse, das einen mittleren Teil, einen vorderen Deckel und zwei Deckeln aufweist, wobei die zwei Deckeln an dem mittleren Teil angebracht sind. In einer im mittleren Teil ausgebildeten Arbeitskammer befindet sich ein Läufer, der am Exzenter einer Welle angebracht ist. Auf der Welle ist eine Riemenscheibe befestigt, die über einen Riementrieb mit einem Generator und einer Wasserpumpe verbunden ist. Dabei ist die Riemenscheibe über eine Wellen-Naben-Verbindung drehfest mit der Welle verbunden, zugleich allerdings über eine Schraube an der Welle befestigt. Zur Demontage müssen der Generator und die Wasserpumpe einerseits und die Riemenscheibe andererseits einzeln vom Motorblock abgenommen werden. Zu diesem Zweck muss die Riemenscheibe durch Lösen der Schraube abgezogen werden. Der Generator und die Wasserpumpe werden einzeln oder zusammen mit dem vorderen Deckel von der Rotationskolbenmaschine gelöst.

Die JP 2009-085116 A zeigt einen Drehkolbenmotor, der einen Motor und eine Welle aufweist, wobei an der Welle eine Riemenscheibe angeordnet ist. Über die Riemenscheibe werden mithilfe eines Keilriemens verschiedene Hilfsaggregate angetrieben, die teilweise an einer Abdeckung angeordnet sind, wobei die Abdeckung die Vorderwand des Motors bildet. Ein Ende der Welle ragt in Längsrichtung durch die Abdeckung, wobei an diesem Ende die Riemenscheibe befestigt ist. Dabei ist die Riemenscheibe auf die Welle aufgesetzt und mit einer Schraube befestigt. Für Wartungstätigkeiten müssen die Hilfsaggregate einerseits und die Riemenscheibe andererseits einzeln, d.h. unabhängig voneinander, abgenommen werden. Zuerst muss die Schraube am Ende der Welle gelöst und danach die Riemenscheibe einzeln von der Welle abgezogen werden. Danach werden die Hilfsaggregate vom Drehkolbenmotor demontiert, wobei die Hilfsaggregate, die an der Abdeckung angeordnet sind, zusammen mit der Abdeckung vom Drehkolbenmotor entfernt werden können. Davor ist es erforderlich, eine untere Abdeckung des Drehkolbenmotors durch Lösen von Schrauben zu entfernen.

In der EP 3 225 810 A1 ist ein Nebentrieb einer Brennkraftmaschine offenbart, der eine Welle umfasst. Die Welle, die innenverzahnt ausgeführt ist und mit einer Kurbelwelle der Brennkraftmaschine in Wirkverbindung steht, weist zwei Wellenenden auf, die jeweils zur Verbindung mit einer leistungsgebenden und/oder leistungsnehmenden Maschine ausgebildet sind, wobei die Maschine außerhalb von einem Kurbelgehäuse angeordnet ist und eine Außenverzahnung aufweist.

Demnach ist es bei den oben diskutierten Verbrennungskraftmaschinen aus dem Stand der Technik für Wartungsarbeiten erforderlich, die Hilfsaggregate getrennt von dem Keilriemen und von der Riemenscheibe, die zum Antrieb der Hilfsaggregate dienen, zu montierten bzw. zu demontieren.

Die Aufgabe der vorliegenden Erfindung besteht darin, zumindest einzelne Nachteile des Standes der Technik zu lindern bzw. zu beseitigen. Die Erfindung setzt sich insbesondere zum Ziel, den Zusammenbau einer gattungsgemäßen Verbrennungskraftmaschine zu vereinfachen, die Belastungen im Betrieb der Verbrennungskraftmaschine zu reduzieren und die Montage bzw. Demontage der Hilfsaggregate bei Wartungsarbeiten zu erleichtern.

Diese Aufgabe wird durch eine Verbrennungskraftmaschine mit den Merkmalen von Anspruch 1 gelöst. Bevorzugte Ausführungsformen sind in den abhängigen Ansprüchen angegeben.

Die Erfindung sieht daher einen das erste Hilfsaggregat aufnehmenden Aggregateträger mit einer das erste Hilfsaggregat antreibenden Hauptwelle vor, wobei die Hauptwelle zur koaxialen Kupplung, insbesondere Steckkupplung, mit dem Abtriebselement eingerichtet ist.

Vorteilhafterweise können das erste Hilfsaggregat und gegebenenfalls weitere Hilfsaggregate unabhängig von der Assemblierung des Motorblocks am gemeinsamen Aggregateträger vormontiert werden. Somit ist eine getrennte Assemblierung von Motorblock und Aggregateträger inklusive Hilfsaggregate möglich. Dadurch kann der Aggregateträger vollständig aufgebaut und danach am Motorblock befestigt werden. Das erste Hilfsaggregat und die Hauptwelle sind an einem gemeinsamen Trägerelement des Aggregateträgers montiert, wobei das gemeinsame Trägerelement durch koaxiales Ankuppeln mit dem Abtriebselement verbindbar ist. Somit können das erste Hilfsaggregat und die Hauptwelle als Einheit, also nicht in vereinzelter Form, mit dem Abtriebselement gekuppelt werden. Beim Entkuppeln des Aggregateträgers werden das erste Hilfsaggregat und die Hauptwelle ebenfalls gemeinsam, d.h. in vorgegebener, fixer Anordnung zueinander am Trägerelement des Aggregateträgers, vom Abtriebselement abgenommen. Selbstverständlich kann zumindest eine weitere lösbare Verbindung zur axialen Sicherung des Aggregateträgers am Motorblock vorgesehen sein, wobei nach dem Lösen dieser Verbindung ein Entkuppeln des Aggregateträgers als Einheit, d.h. ohne einzelne Abnahme von erstem Hilfsaggregat und Hauptwelle, möglich ist. Vorteilhaft ist die einfache, kostengünstige und stabile Anordnung der Hilfs- bzw. Zusatzaggregate am gemeinsamen Aggregateträger. Durch die Anordnung des Hilfsaggregats am Aggregate- bzw. Zusatzantriebsträger bewirkt ein Ausfall des Hilfsaggregats keine Störung des Motorlaufs. Aufgrund des Antriebs des Hilfsaggregats über die Hauptwelle am Aggregateträger werden Belastungen des Motorblocks reduziert. Ein weiterer Vorteil liegt in der platzsparenden und einfachen Bauweise der koaxialen Kupplung zwischen der Hauptwelle und dem Abtriebselement, bei welcher die Rotationsachse des rotierbaren Abtriebselements mit der Rotationsachse der Hauptwelle zusammenfällt. Im gekuppelten Zustand zwischen Abtriebselement und Hauptwelle wird die Drehbewegung des Abtriebselements auf die Hauptwelle des Aggregateträgers übertragen, so dass das Abtriebselement und die Hauptwelle synchron rotieren. Von der Hauptwelle wird die Drehbewegung auf das erste Hilfsaggregat (und gegebenenfalls weitere Hilfsaggregate) übertragen. Die koaxiale Kupplung kann auf verschiedene Weise verwirklicht sein. Bevorzugt ist jedoch eine Steckkupplung bzw. eine steckbare Kupplung, bei welcher über einen Formschluss das Drehmoment von dem Abtriebselement auf die Hauptwelle am Aggregateträger übertragen wird. Weiters ist bevorzugt vorgesehen, dass das Abtriebselement ein Schwungrad ist, das drehfest mit der Abtriebswelle, insbesondere mit einer Exzenterwelle, des Motorblocks verbunden ist.

Um die Einsatzmöglichkeiten der Verbrennungskraftmaschine zu erweitern, ist es günstig, wenn ein zweites Hilfsaggregat, beispielsweise ein Gebläse, ebenfalls zur Motorkühlung, am Aggregateträger angeordnet ist, wobei das zweite Hilfsaggregat ebenfalls durch die Hauptwelle des Aggregateträgers angetrieben ist.

Weiters ist es günstig, wenn ein drittes Hilfsaggregat, beispielsweise ein Starter, am Aggregateträger angeordnet ist.

Gemäß einer bevorzugten Ausführungsform ist als Hauptwelle eine Zahnwelle mit einer ersten Verzahnung, insbesondere einer Innenverzahnung, vorgesehen, welche mit einer zweiten Verzahnung, insbesondere einer Außenverzahnung, des rotierbaren Abtriebselements verbunden ist. Durch die Verzahnungen ist ein Formschluss zwischen der Hauptwelle und dem rotierbaren Abtriebselement gegeben. Durch diese Art von steckbarer Kupplung können keine radialen Kräfte übertragen werden. Im Fall eines Wankelmotors wird die Exzenterwelle nur auf Torsion belastet, was für die Exzenterwellenlager keine zusätzliche Belastung bedeutet.

Bevorzugt ist die Hauptwelle, insbesondere Zahnwelle, über zumindest ein Kraftübertragungselement, vorzugsweise Riemenelement, insbesondere Keilrippenriemen, mit dem ersten, vorzugsweise zudem mit dem zweiten Hilfsaggregat, verbunden.

Besonders bevorzugt ist es, wenn als koaxiale Kupplung zwischen Abtriebselement des Motors und Hauptwelle des Aggregateträgers eine Steckkupplung und als Kraftübertragungselement ein Riemenelement vorgesehen ist. Durch die Steckkupplung kann auf eine Schmierung, welche bei Zahnrädern erforderlich wäre, verzichtet werden, wodurch der Einsatz des Riemenelements ermöglicht wird.

Um bei dieser Variante die Umschlingung an der Hauptwelle, insbesondere zudem die Umschlingung am ersten bzw. zweiten Hilfsaggregat zu erhöhen, ist in einer bevorzugten Ausführungsform das Riemenelement über eine Umlenkrolle geführt. Durch die Erhöhung der Umschlingung wird der Kontaktbereich zwischen dem Riemenelement und einer zugehörigen Riemenscheibe an der Hauptwelle bzw. am ersten oder zweiten Hilfsaggregat erhöht. Damit wird eine bessere Kraftübertragung aufgrund einer höheren Reibungskraft bewirkt. Das Riemenelement kann bei einer bevorzugten Ausführungsvariante mithilfe einer Spannvorrichtung gespannt werden.

Weiters ist das Kraftübertragungselement, insbesondere Riemenelement, bevorzugt auf Seite des Motorblocks am Aggregateträger angeordnet. Dadurch wird das Kraftübertragungselement im Betrieb geschützt angeordnet.

Gemäß einer bevorzugten Ausführungsform weist der Aggregateträger ein Trägerelement, insbesondere ein Gussteil, vorzugsweise aus einer Aluminiumlegierung, mit einer ersten Aufnahme für das erste Hilfsaggregat, vorzugsweise zudem mit einer zweiten Aufnahme für das zweite Hilfsaggregat, auf. Dadurch können das erste bzw. zweite Hilfsaggregat auf einfache Weise am Aggregateträger montiert bzw. demontiert werden. Bei einer Ausführung des Trägerelements als Gussteil wird eine hohe Stabilität bei geringem Gewicht erreicht.

Gemäß einer bevorzugten Ausführungsform weist der Aggregateträger, insbesondere das Trägerelement, ein Drehlager zur Drehlagerung der Hauptwelle auf. Dadurch wird eine Drehung der Hauptwelle relativ zu dem am Motorblock befestigten Aggregateträger ermöglicht.

Um die Einsatzmöglichkeiten der Verbrennungskraftmaschine zu erweitern, ist es günstig, wenn die Hauptwelle ein freies Wellenende auf der vom Motorblock abgewandten Seite des Aggregateträgers aufweist, wobei das freie Wellenende über ein weiteres Kraftübertragungselement, vorzugsweise ein weiteres Riemenelement, mit einem weiteren Hilfsaggregat, insbesondere mit einem Generator, verbunden ist. Das freie Wellenende der Hauptwelle ermöglicht daher den Anschluss zumindest eines weiteren Hilfsaggregats, wohingegen beim Stand der Technik die Abtriebswelle des Motorblocks vielfach durch eine vorgegebene Anordnung von Hilfsaggregaten abgeschlossen wird. Somit kann optional zumindest ein weiteres Hilfsaggregat auf einfache Weise an das freie Wellenende der Hauptwelle angeschlossen werden. Damit werden besonders vielseitige Anwendungen ermöglicht. Zudem wird die Montage bzw. Demontage des weiteren Hilfsaggregats bzw. Zusatzantriebs erleichtert.

Gemäß einer bevorzugten Ausführungsform ist der Aggregateträger über lösbare Verbindungen, insbesondere über mehrere Stehbolzen, vorzugsweise in axialer Richtung der Hauptwelle, mit dem Motorblock verbunden. Somit kann der Aggregateträger einfach und schnell am Motorblock befestigt werden, wobei der Aggregateträger im montierten Zustand stabil am Motorblock gehalten ist.

Gemäß einer bevorzugten Ausführungsform ist ein Nebenaggregat mit einer Schmiermittel- oder Hydraulikflüssigkeitsleitung, insbesondere eine Ölpumpe, am Motorblock fixiert, wobei das Nebenaggregat über die Hauptwelle des Aggregateträgers angetrieben ist. Vorteilhafterweise kann bei dieser Ausführungsform die Ölpumpe bei Wartungsarbeiten am Motorblock fixiert bleiben. Dies hat den Vorteil, dass die Ölleitungen bei Abbau des Aggregateträgers, z.B. für Wartungsarbeiten, nicht extra gelöst werden müssen, was unweigerlich zu Ölaustritt bzw. Schmutzeintrag ins Öl führen würde. Stattdessen können sämtliche ölführenden Teile am Motorblock verbleiben wodurch auch das Wiederbefüllen und Entlüften dieser Leitungen entfällt. Demgegenüber muss beim Stand der Technik vielfach bei jeder Zerlegung des Motors die Ölpumpe abgenommen und die Leitungen neu befüllt werden, was sehr zeitaufwändig, schmutzig und fehleranfällig ist.

Bevorzugt ist das Nebenaggregat mit der Schmiermittel- oder Hydraulikflüssigkeitsleitung, welches insbesondere eine Ölpumpe ist, über eine lösbare Axialkupplung mit dem ersten oder zweiten Hilfsaggregat am Aggregateträger verbunden. Der Vorteil dieser Ausführungsform liegt darin, dass der Aggregateträger vom Motorblock abgenommen werden kann, ohne dass die Schmiermittel- oder Hydraulikflüssigkeitsleitung, insbesondere Ölleitung, vom Motorblock getrennt werden müssen. Die lösbare Axialkupplung ist bevorzugt als steckbare Kupplung, d.h. mit Herstellung eines Formschlusses, ausgebildet.

Die Erfindung wird nachstehend anhand eines in den Zeichnungen dargestellten, nicht einschränkenden Ausführungsbeispiels weiter erläutert.
Fig. 1 zeigt einen erfindungsgemäßen Wankelmotor, bei welchem mehrere Hilfsaggregate an einem gemeinsamen Aggregateträger befestigt sind, in einer perspektivischen Ansicht.
Fig. 2 zeigt einen ersten Schnitt durch den Wankelmotor gemäß Fig. 1 im Bereich einer Exzenterwelle des Wankelmotors.
Fig. 3 zeigt einen zweiten Schnitt durch den Wankelmotor gemäß Fig. 1, 2 im Bereich einer Ölpumpe.
Fig. 4 zeigt den Aggregateträger des Wankelmotors gemäß Fig. 1 bis 3 mit Blick auf eine Hauptwelle zum Antrieb der Hilfsaggregate in einer perspektivischen Ansicht.

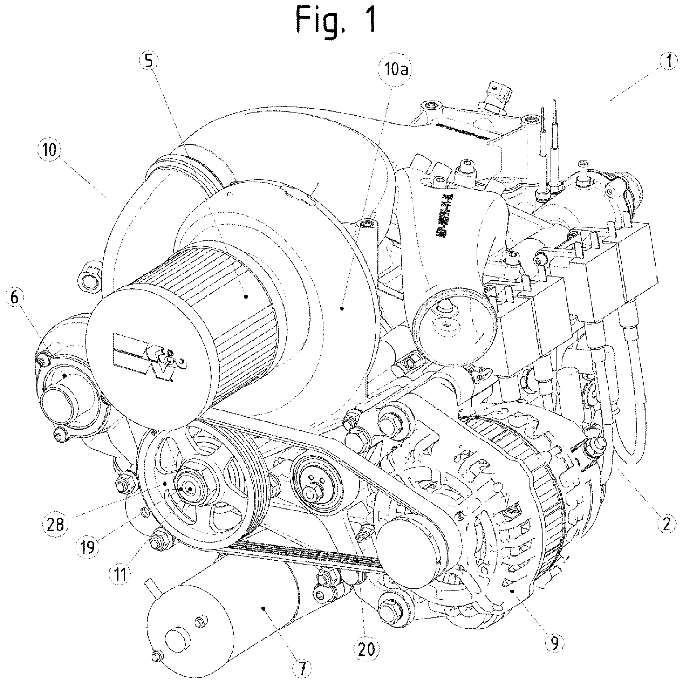

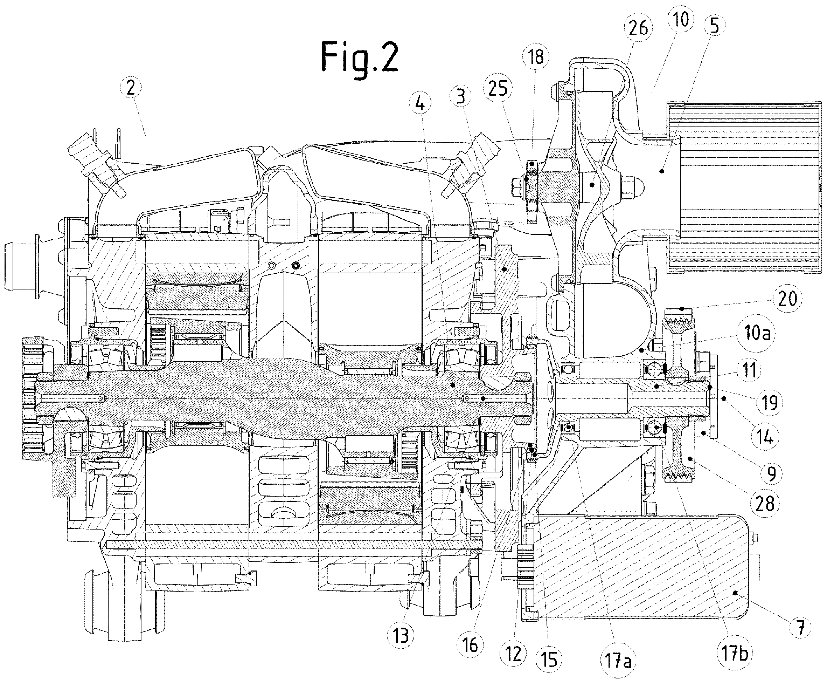

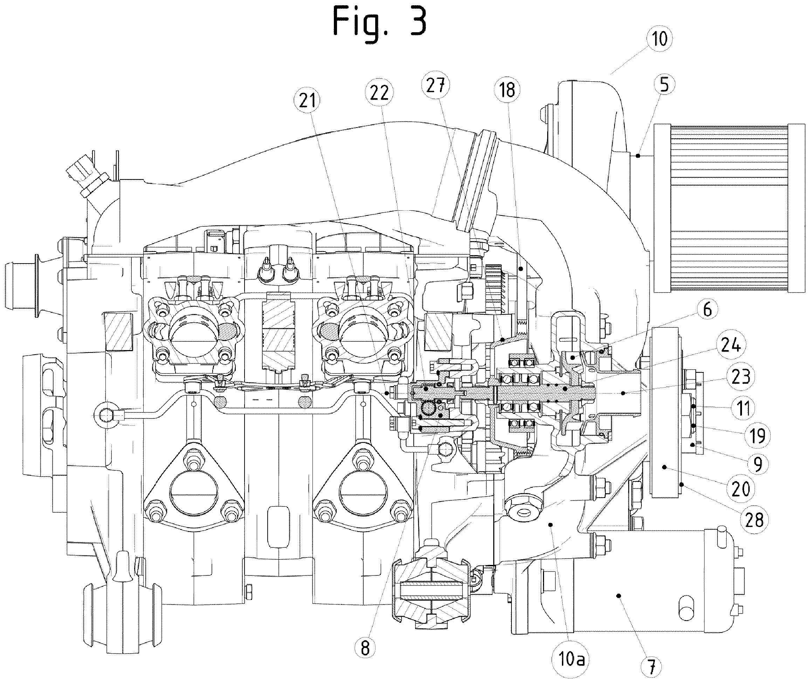

Die Fig. 1 bis 3 zeigen eine Verbrennungskraftmaschine 1, welche in der gezeigten Ausführungsform als Wankelmotor für ein Luftfahrzeug ausgebildet ist. Die Verbrennungskraftmaschine 1 weist einen Motorblock 2 auf, welcher im Stand der Technik an sich bekannt ist, so dass im Folgenden lediglich die für die Erfindung wesentlichen Komponenten erläutert werden. Die Verbrennungskraftmaschine 1 weist ein rotierendes Abtriebselement 3 (vgl. Fig. 2) auf, das in der gezeigten Ausführungsform als Schwungrad ausgeführt ist, welches drehfest mit einer Abtriebswelle 4 (Fig. 2) der Verbrennungskraftmaschine 1 verbunden ist. Bei dem gezeigten Wankelmotor ist die Abtriebswelle 4 als Exzenterwelle ausgeführt. Für den Betrieb des Wankelmotors sind diverse Hilfsaggregate erforderlich. Als erstes, zweites bzw. drittes Hilfsaggregat sind in der gezeigten Ausführungsform ein Gebläse 5 und eine Wasserpumpe 6 jeweils für die Motorkühlung sowie ein Starter 7 vorgesehen. Als Nebenaggregat ist zudem eine Ölpumpe 8 (vgl. Fig. 3) und als weiteres Hilfsaggregat ein Generator 9 vorgesehen. Die Hilfs- und Nebenaggregate sind an sich Stand der Technik, so dass sich nähere Ausführungen dazu erübrigen können.

In der gezeigten Ausführungsform ist ein gemeinsamer Aggregateträger 10 für die Hilfs- bzw. Nebenaggregate vorgesehen. Der Aggregateträger 10 weist in der gezeigten Ausführungsform ein Trägerelement 10a auf, welches in der gezeigten Ausführungsform als Gussteil, insbesondere aus Aluminium, mit vier Aufnahmen für vier Hilfsaggregate, nämlich für das Gebläse 5, die Wasserpumpe 6, den Starter 7 und den Generator 9, ausgeführt ist. Der Aggregateträger 10 weist eine Hauptwelle 11 auf, mit welcher die Hilfs- und Nebenaggregate angetrieben werden. Der Aggregateträger 10 weist zwei Drehlager 17a, 17b zur Drehlagerung der Hauptwelle 11 gegenüber dem Trägerelement 10a auf.

Fig. 2 zeigt eine geschnittene Ansicht des Wankelmotors entlang der Exzenterwelle. In der gezeigten Ausführung ist die Hauptwelle 11 am Aggregateträger 10 zum Antreiben der Hilfsaggregate (Gebläse 5, Wasserpumpe 6 und Generator 9) eingerichtet. Zu diesem Zweck ist eine koaxiale Kupplung 12, in der gezeigten Ausführung eine Steckkupplung, zwischen dem Abtriebselement 3 auf Seite des Motorblocks 2 und der Hauptwelle 11 auf Seite des Aggregateträgers 10 vorgesehen. Demnach ist die Rotationsachse 13 des rotierbaren Abtriebselements 3 mit der Rotationsachse 14 der Hauptwelle 11 deckungsgleich. Im Ausführungsbeispiel gemäß Fig. 2 ist als Hauptwelle 11 eine Zahnwelle mit einer ersten Verzahnung 15, hier einer Innenverzahnung, vorgesehen, welche in eine zweite Verzahnung 16, hier eine Außenverzahnung, des rotierbaren Abtriebselements 3 eingreift. Durch diese steckbare Kupplung ist ein Formschluss zwischen der Hauptwelle 11 und dem rotierbaren Abtriebselement 3 gegeben.

Wie aus Fig. 2 ersichtlich, ist die Hauptwelle 11 über zumindest ein Kraftübertragungselement 18 jeweils mit einem Antriebselement des Gebläses 5 und einem Antriebselement der Wasserpumpe 6 verbunden. Als Kraftübertragungselement ist in der gezeigten Ausführung ein Riemenelement vorgesehen. Das Kraftübertragungselement 18 befindet sich in der gezeigten Ausführung zwischen dem Motorblock 2 und dem Trägerelement 10a des Aggregateträgers 10.

Wie aus Fig. 2 ersichtlich, weist die Hauptwelle 11 ein freies Wellenende 19 auf der vom Motorblock 2 abgewandten Seite des Aggregateträgers 10 auf, wobei das freie Wellenende 19 über ein weiteres Kraftübertragungselement 20 mit einem weiteren Hilfsaggregat, hier dem Generator 9, verbunden ist. Als weiteres Kraftübertragungselement ist in der gezeigten Ausführung ein weiteres Riemenelement vorgesehen.

Wie aus Fig. 3 ersichtlich, ist ein Nebenaggregat mit einer Flüssigkeitsleitung, hier eine Ölpumpe 8, am Motorblock 2 fixiert, wobei die Ölpumpe 8 über die Hauptwelle 11 des Aggregateträgers 10 angetrieben wird. In der gezeigten Ausführungsform ist die Ölpumpe 8 über eine lösbare Axialkupplung mit einem Hilfsaggregat, hier der Wasserpumpe 6, am Aggregateträger 10 verbunden. Demnach ist die Rotationsachse 21 der Antriebswelle 22 der Ölpumpe 8 mit der Rotationsachse 23 der Antriebswelle 24 der Wasserpumpe 6 deckungsgleich. Diese Ausführungsform ermöglicht es, dass die Ölleitungen bei Wartungsarbeiten am Motorblock 2 fixiert bleiben können, wenn der Aggregateträger 10 vom Motorblock abmontiert wird.

Im Betriebszustand der Verbrennungskraftmaschine 1 wird das Drehmoment der als Exzenterwelle ausgeführten Abtriebswelle 4 über das damit drehfest verbundene Schwungrad auf die Hauptwelle 11 des Aggregateträgers 10 übertragen, die mittels der Verzahnungen der Steckkupplung drehfest mit dem Schwungrad verbunden ist. Die Drehbewegung der Hauptwelle 11 wird über das Riemenelement einerseits auf eine Riemenscheibe 25 des Gebläses 5 übertragen, die mit der Antriebswelle 26 des Gebläses 5 verbunden ist. Andererseits wird das Drehmoment von der Hauptwelle 11 über das Riemenelement auf eine Riemenscheibe 27 der Wasserpumpe 6 übertragen, die mit der Antriebswelle 24 der Wasserpumpe 6 verbunden ist.

Zum Antrieb des Generators 9 wird die Drehbewegung der Hauptwelle 11 über das weitere Riemenelement auf den Generator 9 übertragen. Zu diesem Zweck ist das weitere Riemenelement einerseits mit einer Riemenscheibe 28 am freien Wellenende der Hauptwelle 11 auf der vom Motorblock 2 abgewandten Seite des Aggregateträgers 10 und andererseits mit dem Generator 9 verbunden.

Zum Antrieb der Ölpumpe 8 wird die Drehbewegung der Antriebswelle 24 der Wasserpumpe 6 über die lösbare Axialkupplung auf die Antriebswelle 22 der Ölpumpe 8 übertragen.

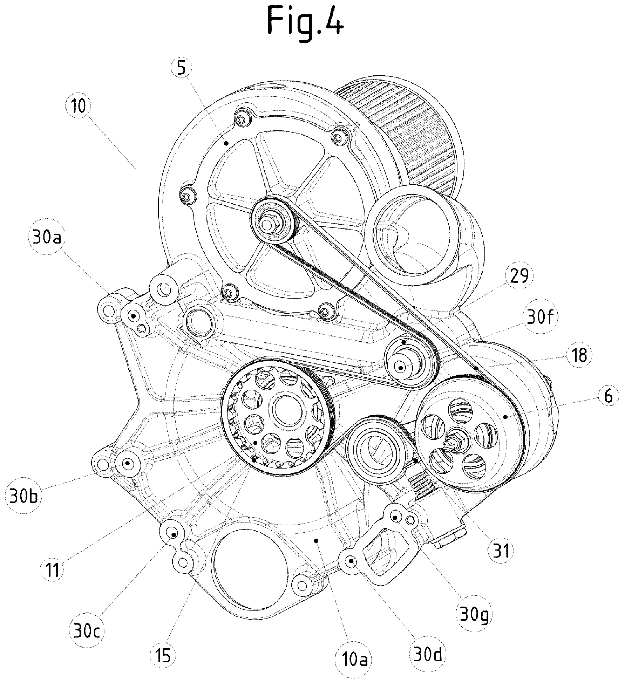

Fig. 4 zeigt im Detail den Aggregateträger 10 des Wankelmotors gemäß Fig. 1 bis 3. In der gezeigten Ausführungsform ist das Riemenelement 18 über eine Umlenkrolle 29 geführt, um die Umschlingung jeweils an der Hauptwelle 11 und an der Riemenscheibe 25 des Gebläses 5 zu erhöhen. In der gezeigten Ausführungsform wird das Riemenelement 18 mithilfe einer Spannvorrichtung 31 gespannt.

Wie aus Fig. 4 ersichtlich, weist der Aggregateträger 10 mehrere Durchgangsbohrungen 30a, 30b, 30c, 30d, 30f und 30g zum Verbinden des Aggregateträgers 10 mit dem Motorblock 2 über mehrere lösbare Verbindungen, in der gezeigten Ausführung über mehrere Stehbolzen, in Richtung der Hauptwelle 11 auf.

Die Montage der Hilfsaggregate am Aggregateträger 10 einerseits und die Montage des Aggregateträgers 10 am Motorblock 2 andererseits umfasst beim gezeigten Ausführungsbeispiel zumindest die folgenden Schritte:
- Drehlagerung der Hauptwelle 11 am Aggregateträger 10 mittels der Drehlager 17a und 17b,
- Montage des Gebläses 5 und der Wasserpumpe 6 am Aggregateträger 10, Anbringen des Riemenelements und Spannen des Riemenelements mittels der Spannvorrichtung 31,
- Montage des Starters 7 und des Generators 9 am Aggregateträger 10,
- Montage der Riemenscheibe 28 am freien Wellenende 19 der Hauptwelle 11 sowie Befestigen und Spannen des weiteren Riemenelements,
- Montage der Ölpumpe 8 sowie der Ölleitungen am Motorblock 2,
- Montage des Aggregateträgers 10 am Motorblock 2, wobei das Trägerelement 10a über lösbare Verbindungen am Motorblock 2 fixiert wird, die Hauptwelle 11 mittels der koaxialen Kupplung mit dem Abtriebselement 3 sowie die koaxiale Kupplung zwischen der Wasserpumpe 6 und der am Motorblock 2 fixierten Ölpumpe 8 in Eingriff gebracht werden.

## Patentansprüche

1. Verbrennungskraftmaschine (1), vorzugsweise Rotationskolbenmotor, insbesondere Wankelmotor, bevorzugt für ein Luftfahrzeug, aufweisend:
- einen Motorblock (2) mit einem rotierbaren Abtriebselement (3), welches insbesondere eine Abtriebswelle (4) oder ein mit der Abtriebswelle (4) verbundenes Schwungrad ist,
- ein erstes Hilfsaggregat, beispielsweise eine Wasserpumpe (6) zur Motorkühlung, welches mit der Abtriebswelle (4) verbunden ist,
**gekennzeichnet durch**
- einen das erste Hilfsaggregat aufnehmenden Aggregateträger (10) mit einer das erste Hilfsaggregat antreibenden Hauptwelle (11), wobei die Hauptwelle (11) zur koaxialen Kupplung, insbesondere Steckkupplung, mit dem Abtriebselement (3) eingerichtet ist.

2. Verbrennungskraftmaschine (1) nach Anspruch 1, **dadurch gekennzeichnet, dass** ein zweites Hilfsaggregat, beispielsweise ein Gebläse (5) zur Motorkühlung, am Aggregateträger (10) angeordnet ist, wobei das zweite Hilfsaggregat durch die Hauptwelle (11) des Aggregateträgers (10) angetrieben ist.

3. Verbrennungskraftmaschine (1) nach Anspruch 1 oder 2, **dadurch gekennzeichnet, dass** als Hauptwelle (11) eine Zahnwelle mit einer ersten Verzahnung (15), insbesondere einer Innenverzahnung, vorgesehen ist, welche mit einer zweiten Verzahnung (16), insbesondere einer Außenverzahnung, des rotierbaren Abtriebselements (3) verbunden ist.

4. Verbrennungskraftmaschine (1) nach einem der Ansprüche 1 bis 3, **dadurch gekennzeichnet, dass** die Hauptwelle (11), insbesondere Zahnwelle, über zumindest ein Kraftübertragungselement (18), vorzugsweise Riemenelement, insbesondere Keilrippenriemen, mit dem ersten, vorzugsweise zudem mit dem zweiten Hilfsaggregat, verbunden ist.

5. Verbrennungskraftmaschine (1) nach Anspruch 4, **dadurch gekennzeichnet, dass** das Kraftübertragungselement (18), insbesondere Riemenelement, auf Seite des Motorblocks (2) am Aggregateträger (10) angeordnet ist.

6. Verbrennungskraftmaschine (1) nach einem der Ansprüche 1 bis 5, **dadurch gekennzeichnet, dass** der Aggregateträger (10) ein Trägerelement (10a), insbesondere ein Gussteil, vorzugsweise aus einer Aluminiumlegierung, mit einer ersten Aufnahme für das erste Hilfsaggregat, vorzugsweise zudem mit einer zweiten Aufnahme für das zweite Hilfsaggregat aufweist.

7. Verbrennungskraftmaschine (1) nach einem der Ansprüche 1 bis 6, **dadurch gekennzeichnet, dass** der Aggregateträger (10), insbesondere das Trägerelement (10a), ein Drehlager (17a, 17b) zur Drehlagerung der Hauptwelle (11) aufweist.

8. Verbrennungskraftmaschine (1) nach einem der Ansprüche 1 bis 7, **dadurch gekennzeichnet, dass** die Hauptwelle (11) ein freies Wellenende (19) auf der vom Motorblock (2) abgewandten Seite des Aggregateträgers (10) aufweist, wobei das freie Wellenende (19) über ein weiteres Kraftübertragungselement (20), vorzugsweise ein weiteres Riemenelement, mit einem weiteren Hilfsaggregat, insbesondere mit einem Generator (9), verbunden ist.

9. Verbrennungskraftmaschine (1) nach einem der Ansprüche 1 bis 8, **dadurch gekennzeichnet, dass** der Aggregateträger (10) über lösbare Verbindungen, insbesondere über mehrere Stehbolzen, vorzugsweise in axialer Richtung der Hauptwelle (11), mit dem Motorblock (2) verbunden ist.

10. Verbrennungskraftmaschine (1) nach einem der Ansprüche 1 bis 9, **dadurch gekennzeichnet, dass** ein Nebenaggregat mit einer Schmiermittel- oder Hydraulikflüssigkeitsleitung, insbesondere eine Ölpumpe (8), am Motorblock (2) fixiert ist, wobei das Nebenaggregat über die Hauptwelle (11) des Aggregateträgers (10) angetrieben ist.

11. Verbrennungskraftmaschine (1) nach Anspruch 10, **dadurch gekennzeichnet, dass** das Nebenaggregat mit der Flüssigkeitsleitung über eine lösbare Axialkupplung mit dem ersten oder zweiten Hilfsaggregat am Aggregateträger verbunden ist.
